# EUROPÄISCHE PATENTSCHRIFT

(11) **EP 0 557 792 B1**
(45) Veröffentlichungstag und Bekanntmachung des Hinweises auf die Patenterteilung: **03.07.1996**
(21) Anmeldenummer: 93102026.7
(22) Anmeldetag: 10.02.1993
(51) Int. Cl.: C08G 18/48, C08G 18/10, C08G 18/76, C08G 18/80

(54) **Verfahren zur Herstellung von Fluorchlorkohlenwasserstoff freien, niedrigdichten Polyurethan Weichschaumstoffen und weichelastischen Polyurethan-Formschaumstoffen sowie hierfür verwendbare, mit Urethangruppen modifizierte Polyisocyanatmischungen auf Diphenylmethan-diisocyanatbasis**
Process for the preparation of low density flexible polyurethane foams and flexible elastic moulded foams devoid of fluorochlorohydrocarbons and polyisocyanate mixtures on difenylmethane diisocyanate basis modified by urethane groups for use therewith
Procédé de préparation de mousses de polyuréthanes flexibles et mousses moulées élastiques souples à basse densité et dépourvues de fluorochlorohydrocarbures et mélanges de polyisocyanates à base de diisocyanate de diphénylméthane modifiés par des groupes d'uréthane adaptés à ce procédé

(30) Priorität: 27.02.1992 DE 4205934
(43) Veröffentlichungstag der Anmeldung: 01.09.1993
(73) Patentinhaber: BASF Aktiengesellschaft, D-67063 Ludwigshafen (DE)
(72) Erfinder: Hinz, Werner, Dr., W-6710 Frankenthal (DE); Zschiesche, Ruth, Dr., W-6800 Mannheim 24 (DE); Lutter, Heinz-Dieter, Dr., W.6903 Neckargemuend (DE); Bruchmann, Bernd, Dr., W-6700 Ludwigshafen (DE)

(56) Entgegenhaltungen:
- EP-A- 0 022 617
- EP-A- 0 111 121
- EP-A- 0 398 304
- FR-A- 2 383 976

## Beschreibung

Gegenstände der Erfindung sind ein Verfahren zur Herstellung von Fluorchlorkohlenwasserstoff (FCKW) freien Polyurethan (PU)-Weichschaumstoffen mit geringer Dichte und weichelastischen PU-Formschaumstoffen durch Umsetzung der an sich bekannten Ausgangsstoffe, jedoch unter Verwendung spezieller, flüssiger, mit Urethangruppen modifizierter Polyisocyanatmischungen auf Diphenylmethan-diisocyanat(MDI)-basis mit einem Isocyanatgehalt von 22 bis 30 Gew.-%, die ihrerseits hergestellt werden durch Umsetzung einer Mischung aus Diphenylmethan-diisocyanaten und Polyphenyl-polymethylen-polyisocyanaten (Roh-MDI) mit mindestens einem Polyoxypropylen-polyoxyethylen-polyol mit einer Funktionalität von 2,5 bis 3,5, einer Hydroxylzahl von 50 bis 90 und einem Gehalt an polymerisierten Ethylenoxidgruppen von mehr als 30 bis weniger als 50 Gew.-%, bezogen auf das Gewicht der Alkylenoxidgruppen, oder durch Umsetzung von 4,4'-MDI oder einer MDI-Isomerenmischung mit dem genannten Polyoxypropylen-polyoxyethylen-polyol zu einem NCO-Gruppen haltigen Quasiprepolymeren und Verdünnung dieses Quasiprepolymeren mit Roh-MDI und derartige flüssige, Urethangruppen gebunden enthaltende Polyisocyanatmischungen.

Die Herstellung von PU-Weich- oder weichelastischen PU-Formschaumstoffen durch Umsetzung von höhermolekularen Polyhydroxylverbindungen, vorzugsweise von Polyester- oder Polyether-polyolen, und gegebenenfalls Kettenverlängerungs- und/ oder Vernetzungsmitteln mit organischen oder/und modifizierten organischen Polyisocyanaten ist bekannt und wird in zahlreichen Patent- und Literaturveröffentlichungen beschrieben.

Beispielhaft genannt seien das Kunststoff-Handbuch, Band VII, Polyurethane, Carl Hanser Verlag, München, 1. Auflage, 1966, herausgegeben von Dr. R. Vieweg und Dr. A Höchtlen, und 2. Auflage, 1983, herausgegeben von Dr. G. Oertel.

Durch geeignete Wahl der Aufbaukomponenten und ihrer Mengenverhältnisse können PU-Weichschaumstoffe mit sehr guten mechanischen Eigenschaften, insbesondere mit einer hohen Reißfestigkeit und hohen Stauchhärte, erhalten werden.

Nach Angaben der DE-C-1520737 (US-A-3 336 242) können PU-Schaumstoffe mit offener Zellstruktur hergestellt werden nach einem einstufigen Verfahren durch Umsetzung von Polyisocyanaten mit Polyoxypropylen-polyoxyethylen-triolen mit Molekulargewichten von 3000 bis 8000, die als Endblock 3 bis 5 Gew.-% Ethylenoxid und als Startermolekül Glycerin gebunden enthalten.

Sehr weiche PU-Schaumstoffe erhält man nach GB-A-1 079 105 aus einem Polyether-polyol oder einer -mischung mit einer Hydroxylzahl von 70 bis 170, die enthält ein trifunktionelles Polyoxyalkylen-polyol, wie z.B. oxpropyliertes Glycerin und bis zu 40 Gew.-% eines Polyoxyalkylen-glykols, z.B. oxpropyliertes Ethylenglykol, und einem organischen Polyisocyanat, bevorzugt Toluylen-diisocyanat (TDI), in Gegenwart von Wasser und einem Fluorchlorkohlenwasserstoff, vorzugsweise Trichlorfluormethan, als Treibmittel.

Flexible PU-Schaumstoffe werden ferner in der GB-A-1 064 576 beschrieben. Nach Angaben dieser Patentschrift werden organische Diisocyanate, vorzugsweise TDI, mit einer Mischung aus 50 bis 90 Gew.-% eines Polyoxyalkylen-triols mit einer Hydroxylzahl von 30 bis 170 und 10 bis 50 Gew.-% eines Polyoxyalkylen-diols mit einer Hydroxylzahl von 40 bis 110, wobei die Mischung einen Gehalt an primären Hydroxylgruppen von 10 bis 65 % besitzt, in Gegenwart von Wasser zur Reaktion gebracht.

Bekannt ist auch die Herstellung von bei Raumtemperatur flüssigen Diphenylmethan-diisocyanat-Zusammensetzungen.

Nach Angaben der DE-C-16 18 380 (US-A-3 644 457) werden hierzu ein Mol 4,4'- und/oder 2,4'-MDI mit 0,1 bis 0,3 Mol Tri-1,2-oxypropylen-glykol und/oder Poly-1,2-oxypropylen-glykol glykol mit einem Molekulargewicht bis 700 zur Reaktion gebracht.

Gemäß GB-A-1 369 334 wird die Modifizierung in zwei Reaktionsstufen durchgeführt und als Modifizierungsmittel Dipropylen-glykol oder Polyoxypropylen-glykol mit einem Molekulargewicht unter 2000 verwendet.

Die DE-A-29 13 126 (US-A-4 229 347) beschreibt MDI-Zusammensetzungen, in denen 10 bis 35 Gew.-% der Isocyanatgruppen mit einem Gemisch aus mindestens 3 Alkylenglykolen umgesetzt werden und wobei eines dieser Glykole Di-, Tri- oder ein höhermolekulares Polypropylen-glykol ist.

In der DE-A-24 04 166 (GB-A-1 430 455) werden hingegen als Modifizierungsmittel Gemische aus einem Polyoxyethylen-glykol oder Polyoxyethylen-glykolgemisch mit einem durchschnittlichen Molekulargewicht kleiner als 650 und mindestens einem Alkylenglykol mit mindestens 3 C-Atomen genannt.

Die DE-A-23 46 996 (GB-A-1 377 679) betrifft MDI-Zusammensetzungen, bei denen 10 bis 35 Gew.-% der Isocyanatgruppen mit einem handelsüblichen Polyoxyethylen-glykol umgesetzt wurden.

Zur Herstellung von flüssigen Polyisocyanat-Zusammensetzungen wurde neben MDI und Glykolen und/oder Polyoxyalkylen-glykolen zusätzlich auch die Mitverwendung von Roh-MDI beschrieben.

Nach der EP-A-10 850 besteht eine derartige Polyisocyanat-Zusammensetzung aus einem mit Polyoxyalkylen-polyolen mit einer Funktionalität von 2 bis 3 auf Basis von Polyoxypropylen-polyol und gegebenenfalls Polyoxyethylen-polyol mit Molekulargewichten von 750 bis 3000 modifiziertem MDI im Gemisch mit Roh-MDI.

Eine flüssige Roh-MDI-Zusammensetzung wird nach der DE-B-27 37 338 (US-A-4 055 548) durch Vereinigen von Roh-MDI mit einem Polyoxyethylen-glykol mit einem durchschnittlichen Molekulargewicht von 200 bis 600 erhalten.

Nach Angaben der DE-B-26 24 526 (GB-A-1 550 325) wird ein nach einem speziellen Verfahren hergestelltes Roh-MDI mit 88 bis 95 Gew.-% MDI mit Polyoxypropylen-glykol des Molekulargewichtsbereichs 134 bis 700 umgesetzt.

Die DE-A-25 13 796 (GB-A-1 444 192) und DE-A-25 13 793 (GB-A-1 450 660) betreffen Roh-MDI-Zusammensetzungen, bei denen das Roh-MDI mit Alkylen- oder Polyoxyalkylen-glykolen in bestimmten Mengen modifiziert wurde.

Die genannten Alkylen- oder Polyoxyalkylen-glykole bewirken zwar eine Verflüssigung der bei 42° bzw. 28°C schmelzenden 4,4'- bzw. 2,4'-MDI-Isomeren. Nachteilig ist jedoch, daß die Polyisocyanat-Zusammensetzungen bei Temperaturen um 10°C nach längeren Lagerzeiten kristalline Ausscheidungen zeigen.

Es ist ferner bekannt, PU-Weichschaumstoffe unter Verwendung von mit Urethangruppen modifizierten Roh-MDI-Zusammensetzungen als Polyisocyanatkomponente herzustellen.

Nach Angaben der EP-A-22 617 wird hierbei ein di- bis trifunktionelles Polyoxypropylen-polyoxyethylen-polyol mit einem Gehalt an polymerisierten Oxyethylengruppen von mindestens 50 Gew.-% mit einer Mischung aus MDI-Isomeren zur Reaktion gebracht und das erhaltene Quasiprepolymer anschließend mit Roh-MDI verdünnt. Nachteilig an den beschriebenen PU-Schaumstoffen ist insbesondere die geringe Zug- und Weiterreißfestigkeit.

Mit Urethangruppen modifizierte Polyisocyanatmischungen auf Basis von Roh-MDI mit einem Gehalt an NCO-Gruppen von 12 bis 30 Gew.-% werden auch in der EP-B-0 111 121 (US-A-4 478 960) beschrieben. Zur Modifizierung des MDI oder Roh-MDI wird ein Polyoxypropylen-polyoxyethylen-polyol mit einer Funktionalität von 2 bis 4, einer Hydroxylzahl von 10 bis 65 und einem Gehalt an polymerisierten Ethylenoxideinheiten von 5 bis 30 Gew.-% eingesetzt. Unter Verwendung dieser mit Urethangruppen modifizierten Polyisocyanatmischungen können PU-Schaumstoffe mit einer erhöhten Reißdehnung sowie verbesserten Zug- und Weiterreißfestigkeit hergestellt werden. Nachteilig an diesen PU-Schaumstoffen ist lediglich, daß zu ihrer Herstellung Fluorchlorkohlenwasserstoffe als Treibmittel verwendet werden.

Der vorliegenden Erfindung lag die Aufgabe zugrunde, ein Verfahren zur Herstellung von PU-Weichschaumstoffen oder weichelastischen PU-Formschaumstoffen mit geringen Dichten und guten mechanischen Eigenschaften, insbesondere einer niedrigen Stauchhärte, aufzuzeigen. Bei der Verschäumung sollte auf die Verwendung von physikalischen Treibmitteln weitgehend und auf den Einsatz von umweltschädigenden FCKW's vollständig verzichtet werden. Als Treibmittel sollte vorzugsweise Wasser eingesetzt werden, das mit Isocyanatgruppen unter Bildung von Kohlendioxid, dem eigentlichen Treibgas, reagiert. Gewährleistet sein sollte eine gute Verträglichkeit der PU-Systemkomponenten miteinander und eine gute Mischbarkeit der Reaktionsmischung mit polaren oder unpolaren Treibmitteln, insbesondere mit Wasser.

Durch diese Maßnahmen sollte die Verarbeitungssicherheit der PU-Formulierung, unabhängig von der angewandten Schäumvorrichtung, erhöht und die Bildung von Schaumstoffausschuß auf ein Minimum reduziert werden.

Diese Aufgabe konnte überraschenderweise gelöst werden durch die Verwendung einer mit Urethangruppen modifizierten, speziellen Polyisocyanatmischung auf MDI-Basis als Polyisocyanatkomponente und Wasser als insbesondere bevorzugtes Treibmittel bei der PU-Schaumstoffherstellung.

Gegenstand der Erfindung ist somit ein Verfahren zur Herstellung von PU-Weichschaumstoffen und weichelastischen PU-Formschaumstoffen die frei sind von Fluorchlorkohlenwasserstoffen, die die Ozonschicht schädigen durch Umsetzung von
A) flüssigen, Urethangruppen gebunden enthaltenden Polyisocyanatmischungen auf Diphenylmethan-diisocyanatbasis mit
B) höhermolekularen Polyhydroxylverbindungen mit Molekulargewichten von 800 und mehr und
C) gegebenenfalls Kettenverlängerungsmitteln und/oder Vernetzungsmitteln
in Gegenwart von
D) Treibmitteln,
E) Katalysatoren
sowie gegebenenfalls
F) Hilfsmitteln und/oder Zusatzstoffen,
das dadurch gekennzeichnet ist, daß die flüssigen Urethangruppen gebunden enthaltende Polyisocyanatmischung (A) einen Gehalt an NCO-Gruppen von 22 bis 30 Gew.-%, bezogen auf das Gesamtgewicht, besitzen und erhalten werden

### I) durch Umsetzung

a) einer Mischung (I) aus Diphenylmethan-diisocyanaten und Polyphenyl-polymethylen-polyisocyanaten (Roh-MDI) mit einem Gehalt an Diphenylmethan-diisocyanat(MDI)-Isomeren von 35 bis 94 Gew.-%, bezogen auf das Gesamtgewicht, mit
b) mindestens einem Polyoxypropylen-polyoxyethylen-polyol (b) mit einer Funktionalität von 2,5 bis 3,5, einer Hydroxylzahl von 50 bis 90 und einem Gehalt an polymerisierten Ethylenoxidgruppen von mehr als 30 bis weniger als 50 Gew.-%, bezogen auf das Gewicht an polymerisierten Ethylenoxid- und 1,2-Propylenoxidgruppen
oder

### II) durch Verdünnung

c) eines Urethangruppen enthaltenden Quasiprepolymeren mit einem NCO-Gehalt von 10 bis 19 Gew.-%, erhalten durch Umsetzung von 4,4'-Diphenylmethandiisocyanat (MDI) oder einer Mischung aus Diphenylmethan-diisocyanat(MDI)-Isomeren (II) mit dem vorgenannten Polyoxypropylen-polyoxyethylenpolyol (b),
   mit a) der vorgenannten Mischung (I) aus Diphenylmethan-diisocyanaten und Polyphenyl-polymethylen-polyisocyanaten (Roh-MDI).
Gegenstand der Erfindung sind ferner die für das erfindungsgemäße Verfahren zur Herstellung der FCKW freien PU-Weich(form)schaumstoffe verwendbaren flüssigen, mit Urethangruppen modifizierten Polyisocyanatmischungen auf Diphenylmethan-diisocyanatbasis mit einem Gehalt an NCO-Gruppen von 22 bis 30 Gew.-%, die erhalten werden

### I) durch Umsetzung

a) einer Mischung (I) aus Diphenylmethan-diisocyanaten und Polyphenyl-polymethylen-polyisocyanaten (Roh-MDI) mit einem Gehalt an Diphenylmethan-diisocyanat(MDI)-Isomeren von 35 bis 94 Gew.-%, bezogen auf das Gesamtgewicht, mit
b) mindestens einem Polyoxypropylen-polyoxyethylen-polyol (b) mit einer Funktionalität von 2,5 bis 3,5, einer Hydroxylzahl von 50 bis 90 und einem Gehalt an polymerisierten Ethylenoxidgruppen von mehr als 30 bis weniger als 50 Gew.-%, bezogen auf das Gewicht an polymerisierten Ethylenoxid und 1,2-Propylenoxidgruppen
oder

### II) durch Verdünnung

c) eines Urethangruppen enthaltenden Quasiprepolymeren mit einem NCO-Gehalt von 10 bis 19 Gew.-%, erhalten durch Umsetzung von 4,4'-Diphenylmethandiisocyanat (MDI) oder einer Mischung aus Diphenylmethan-diisocyanat(MDI)-Isomeren (II) mit dem vorgenannten Polyoxypropylen-polyoxyethylen-polyol (b) mit
a) der vorgenannten Mischung (I) aus Diphenylmethan-diisocyanaten und Polyphenyl-polymethylen-polyisocyanaten (Roh-MDI) mit einem Gehalt an Diphenylmethan-diisocyanat(MDI)-Isomeren von 35 bis 94 Gew.-%, bezogen auf das Gesamtgewicht.

Die nach dem erfindungsgemäßen Verfahren unter Verwendung der speziellen, mit Urethangruppen modifizierten Polyisocyanatmischungen (A) hergestellten PU-Weich(form)schaumstoffe besitzen trotz der relativ niedrigen Dichte ein hohes mechanisches Eigenschaftsniveau.

PU-Weichschaumstoffe mit vergleichbar guten Ergebnissen konnten bei Verwendung von Polyoxypropylen-polyoxyethylen-polyolen mit anderen 1,2-Propylenoxid-Ethylenoxid-Mengenverhältnissen, anderen Hydroxylzahlen und anderer Funktionalität zur Modifizierung der Polyisocyanatmischung auf MDI-Basis nicht erzielt werden. Hervorzuheben ist insbesondere die niedrige Stauchhärte der erfindungsgemäß hergestellten PU-Weich(form)schaumstoffe, da mit aus Wasser gebildetem Kohlendioxid getriebene PU-Weichschaumstoff durch den erhöhten Anteil an Harnstoffresten tendenziell zu hart sind. Durch das ausgewogene Verhältnis von hydrophilen Ethylenoxid- zu hydrophoben 1,2-Propylenoxideinheiten im Polyoxypropylen-polyoxyethylen-polyol (b) sind die System-komponenten miteinander oder die Reaktionsmischung mit polaren Treibmitteln, wie z.B. Wasser oder Carboxylgruppen haltigen Verbindungen, oder unpolaren Treibmitteln, wie z.B. Alkanen oder Fluoralkanen, gleichermaßen gut verträglich und die Reaktionsmischungen auf verschiedenartigen Schaumvorrichtungen problemlos verarbeitbar.

Zur Herstellung der neuen, flüssigen Urethangruppen gebunden enthaltenden Polyisocyanatmischungen auf MDI-Basis (A) und zu den für das erfindungsgemäßen Verfahren zur Herstellung der FCKW freien PU-Weich(form)schaumstoffe verwendbaren anderen Aufbaukomponenten (B) bis (F) ist im einzelnen folgendes auszuführen:

Zur Herstellung der flüssigen, Urethangruppen gebunden enthaltenden Polyisocyanatmischungen (A) mit einem Gehalt an NCO-Gruppen von 22 bis 30 Gew.-%, vorzugsweise von 25 bis 29 Gew.-%, finden vorteilhafterweise die folgenden RohMDI (I)- und MDI-Isomeren (II)-Mischungen Verwendung:

Geeignete Mischungen (I) aus Diphenylmethan-diisocyanaten und Polyphenyl-polymethylen-polyisocyanaten, üblicherweise Roh-MDI genannt, besitzen neben höheren Homologen einen Gehalt an MDI-Isomeren von 35 bis 94 Gew.-%, vorzugsweise von 59 bis 85 Gew.-%. Vorzüglich bewährt haben sich Roh-MDI, die enthalten oder vorzugsweise bestehen aus, bezogen auf das Gesamtgewicht,
- Ia1): 34 bis 65 Gew.-%, vorzugsweise 51 bis 65 Gew.-%, 4,4'-MDI,
- Ia2): 1 bis 25 Gew.-%, vorzugsweise 8 bis 20 Gew.-% 2,4'-MDI,
- Ia3): 0 bis 4 Gew.-%, vorzugsweise 0,5 bis 2,5 Gew.-% 2,2'-MDI und
- Ia4): 65 bis 6 Gew.-%, vorzugsweise 41 bis 15 Gew.-%, insbesondere 38 bis 29 Gew.-%, mindestens trifunktionelle Polyphenyl-polymethylen-polyisocyanate.

Mischungen aus MDI-Isomeren (II) enthalten zweckmäßigerweise oder bestehen vorzugsweise, bezogen auf das Gesamtgewicht, aus
- IIa1): 90 bis 48 Gew.-%, vorzugsweise 80 bis 60 Gew.-% 4,4'-MDI,
- IIa2): 10 bis 48 Gew.-%, vorzugsweise 20 bis 40 Gew.-% 2,4'-MDI und
- IIa3): 0 bis 4 Gew.-%, vorzugsweise 0 bis 2,5 Gew.-% 2,2'-MDI.

Die erfindungsgemäß als Modifizierungsmittel verwendbaren Polyoxypropylen-polyoxyethylen-polyole (b) besitzen eine Funktionalität von 2,5 bis 3,5, vorzugsweise von 2,5 bis 3,0, eine Hydroxylzahl von 50 bis 90, vorzugsweise von 65 bis 75 und einen Gehalt an polymerisierten Ethylenoxidgruppen von mehr als 30 Gew.-% bis weniger als 50 Gew.-%, vorzugsweise von 31 bis 49 Gew.-%, und insbesondere von 45 bis 49 Gew.-%, bezogen auf das Gesamtgewicht an polymerisierten Ethylenoxid- und 1,2-Propylenoxidgruppen. Hierbei können die polymerisierten 1,2-Propylenoxid- und Ethylenoxidgruppen jeweils als mittel- oder endständige Blöcke, oder mittelständig in statistischer Verteilung mit endständigen 1,2-Propylenoxid- oder Ethylenoxidgruppen gebunden sein. Vorzugsweise verwendet werden solche Polyoxypropylen-polyoxyethylen-polyole, die die polymerisierten Ethylenoxid- und 1,2-Propylenoxidgruppen in statistischer Verteilung gebunden enthalten und einen Gehalt an sekundären Hydroxylgruppen von mindestens 50 %, vorzugsweise von mindestens 60 % und insbesondere von mindestens 70 % gebunden haben. In Abhängigkeit vom Gehalt an Ethylenoxideinheiten und dessen Stellung im Polyoxypropylen-polyoxyethylen-polyol kann dessen Reaktivität und die Mischbarkeit der hergestellten Urethangruppen enthaltenden Polyisocyanatmischungen mit den übrige Ausgangsstoffen gezielt den jeweiligen Erfordernissen angepaßt werden.

Als Startermoleküle zur Herstellung der erfindungsgemäß verwendbaren Polyoxypropylen-polyoxyethylen-polyole (b) in Gegenwart von basischen Katalysatoren finden beispielsweise cycloaliphatische Triole, wie z.B. Cyclohexantriol-Isomerengemische, oder vorzugsweise aliphatische Triole, wie z.B. Trimethylolpropan und insbesondere Glycerin Verwendung. Geeignet sind jedoch Mischungen aus Wasser und/oder (cyclo)aliphatischen Diolen und tri- und/oder tetrafunktionellen Alkoholen mit der Maßgabe, daß die Mischung der Startermoleküle eine Funktionalität im Bereich von 2,5 bis 3,5 besitzt.

Gebräuchliche basische Katalysatoren sind z.B. Alkalialkoxide mit 1 bis 4 Kohlenstoffatomen im Alkylrest, wie Natriummethylat, Natrium- und Kaliumethylat, Kaliumisopropylat und Natriumbutylat, Erdalkalihydroxide, wie z.B. Calciumhydroxid und vorzugsweise Alkalihydroxide, insbesondere z.B. Natrium- und Kaliumhydroxid.

Zur Herstellung der erfindungsgemäß verwendbaren Urethangruppen enthaltenden Polyisocyanatmischung (A) nach der bevorzugten Verfahrensvariante (I) werden das Roh-MDI (I) und des Polyoxypropylen-polyoxyethylen-polyol (b) bei Temperaturen von 0 bis 120°C, vorzugsweise von 30 bis 90°C in solchen Mengen zur Reaktion gebracht, daß das NCO-:OH-Gruppenverhältnis 1:0,001 bis 1:0,19, vorzugsweise 1:0,01 bis 1:0,1 beträgt. Nach einer Reaktionszeit von 0,5 bis 6 Stunden, vorzugsweise von 1 bis 3 Stunden läßt man die lagerstabile Polyisocyanatmischung auf MDI-Basis (A), die einen Gehalt an NCO-Gruppen von 22 bis 30 Gew.-% besitzt, abkühlen.

Werden die erfindungsgemäß verwendbaren Polyisocyanatmischungen (A) nach der Verfahrensvariante (II) hergestellt, so werden eine Mischung aus MDI-Isomeren (II) oder vorzugsweise 4,4'-MDI und als Polyoxypropylen-polyoxyethylen-polyol (b) bei Temperaturen von 0 bis 120°C, vorzugsweise von 30 bis 90°C in einer solchen Menge zur Reaktion gebracht, daß das Verhältnis von NCO-:OH-Gruppen 1:0,001 bis 1:0,2, vorzugsweise 1:0,02 bis 1:0,15 beträgt. Nach einer Reaktionszeit von 0,5 bis 6 Stunden, vorzugsweise von 1 bis 3 Stunden, läßt man das urethangruppenhaltige Quasiprepolymer auf MDI-Basis mit einem NCO-Gehalt von 10 bis 19 Gew.-%, vorzugsweise von 12 bis 18 Gew.-% abkühlen und verdünnt es mit Roh-MDI (I) bis zu einem NCO-Gehalt von 22 bis 30 Gew.-%.

Die nach den Verfahrensvarianten (I) und (II) hergestellten, erfindungsgemäß verwendbaren Urethangruppen gebunden enthaltenden Polyisocyanatmischungen (A) sind bei Temperaturen von -4°C über einen Zeitraum von mindestens 12 Wochen lagerbeständig.

Zur Herstellung der FCKW freien PU-Weichschaumstoffe oder weichelastischen PU-Formschaumstoffe werden die flüssigen, Urethangruppen gebunden enthaltenden Polyisocyanatmischungen auf MDI-Basis (A), wie bereits ausgeführt wurde, mit üblichen höhermolekularen Polyhydroxylverbindungen (B) und gegebenenfalls niedermolekularen Kettenverlängerungsmitteln und/ oder Vernetzungsmitteln (C) in Gegenwart von Treibmitteln (D), Katalysatoren (E) sowie gegebenenfalls Hilfsmitteln und/oder Zusatzstoffen (F) in offenen oder geschlossenen Formwerkzeugen verschäumt.

Als höhermolekulare Polyhydroxylverbindungen (B) finden hierzu vorzugsweise übliche lineare und/oder verzweigte Polyester-polyole und insbesondere Polyether-polyole mit Molekulargewichten von 800 bis 8200, vorzugsweise von 1200 bis 7000 und insbesondere von 1800 bis 6200 Anwendung. In Betracht kommen jedoch auch polymermodifizierte Polyether-polyole, Polyether-polyoldispersionen und andere hydroxylgruppenhaltige Polymere mit den obengenannten Molekulargewichten, beispielsweise Polyesteramide, Polyacetale und/oder Polycarbonate, insbesondere solche, hergestellt aus Diphenylcarbonat und Hexandiol-1,6 durch Umesterung oder Mischungen aus mindestens zwei der genannten Polyhydroxylverbindungen.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen und/oder Dialkylen-glykolen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole und Dialkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole und/oder Alkylenglykole katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 4, insbesondere 2 bis 3 und ein Molekulargewicht von 800 bis 3600, vorzugsweise 1200 bis 3000 und insbesondere 1800 bis 2500.

Insbesondere als Polyhydroxylverbindungen verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 4, vorzugsweise 2 bis 3 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin und Trialkanolamine wie z.B. Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan und Pentaerythrit.

Die Polyether-polyole, vorzugsweise Polyoxypropylen- und Polyoxypropylen-polyoxyethylen-polyole, besitzen eine Funktionalität von 2 bis 4 und vorzugsweise 2 bis 3 und Molekulargewichte von 800 bis 8200, vorzugsweise 1200 bis 7000 und insbesondere 1800 bis 6200 und geeignete Polyoxytetramethylen-glykole ein Molekulargewicht bis ungefähr 3500.

Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.

Die Polyether-polyole können ebenso wie die Polyester-polyole einzeln oder in Form von Mischungen verwendet werden. Ferner können sie mit den Pfropf-polyether-polyolen oder Polyester-polyolen sowie den hydroxylgruppenhaltigen Polyesteramiden, Polyacetalen und/oder Polycarbonaten gemischt werden. Vorzüglich bewährt haben sich beispielsweise Mischungen mit einer Funktionalität von 2 bis 3 und einem Molekulargewicht von 800 bis 8200, die enthalten mindestens ein Polyether-polyol und mindestens ein polymermodifiziertes Polyether-polyol aus der Gruppe der Pfropfpolyether-polyole oder Polyether-polyoldispersionen, die als disperse Phase Polyharnstoffe, Polyhydrazide oder tertiäre Aminogruppen gebunden enthaltende Polyurethane enthalten.

Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie z.B. Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Die FCKW freien PU-Weich(form)schaumstoffe können ohne oder unter Mitverwendung von Kettenverlängerungs- und/oder Vernetzungsmitteln (C) hergestellt werden. Zur Modifizierung der mechanischen Eigenschaften, z.B. der Härte, kann sich jedoch der Zusatz von derartigen Kettenverlängerungsmitteln, Vernetzungsmitteln oder gegebenenfalls auch Gemischen davon als vorteilhaft erweisen. Als Kettenverlängerungs- und/oder Vernetzungsmittel kommen polyfunktionelle, insbesondere di- und trifunktionelle Verbindungen mit Molekulargewichten von 18 bis ungefähr 400, vorzugsweise von 62 bis ungefähr 300 in Betracht. Verwendet werden beispielsweise Di- und/oder Trialkanolamine, wie z.B. Diethanolamin und Triethanolamin, Alkylenglykole, z.B. Diethylen- und Dipropylenglykol, aliphatische Diole und/oder Triole mit 2 bis 6 Kohlenstoffatomen im Alkylenrest, wie z.B. Ethan-, 1,3-Propan-, 1,4-Butan-, 1,5-Pentan-, 1,6-Hexandiol, Glycerin und/oder Trimethylolpropan und niedermolekulare Ethoxylierungs- und/oder Propoxylierungsprodukte, hergestellt aus den vorgenannten Di-, Trialkanolaminen, Diolen und/oder Triolen sowie aliphatischen und/oder aromatischen Diaminen wie z.B. 1,2-Ethan-, 1,4-Butan-, 1,6-Hexandiamin, 2,3-, 2,4- und/oder 2,6-Toluylen-diamin, 4,4'-Diamino-diphenylmethan, 3,3'-di- und/oder 3,3',5,5'-tetraalkyl-substituierten 4,4'-Diaminodiphenylmethanen als Startermolekülen und Alkylenoxid oder -gemischen.

Als Kettenverlängerungs- und/oder Vernetzungsmittel (C) vorzugsweise eingesetzt werden Dialkanolamine, Diole und/oder Triole und insbesondere Diethanolamin, Hexandiol-1,6, Butandiol-1,4, Trimethylolpropan und Glycerin oder Mischungen davon.

Die Kettenverlängerungs- und/oder Vernetzungsmittel (C), die vorzugsweise zur Herstellung der PU-Weich(form)schaumstoffe mitverwendet werden, kommen zweckmäßigerweise in solchen Gewichtsmengen zur Anwendung, die pro Mol höhermolekularer Polyhydroxylverbindung (B) 0,01 bis 8 Mole, insbesondere 0,1 bis 3 Mole Kettenverlängerungsmittel (b) in der Reaktionsmischung vorliegen.

Als Treibmittel (D) zur Herstellung der PU-Weich(form)schaumstoffe, findet insbesondere Wasser Verwendung, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 2,5 bis 6,0 Gew.-Teile und insbesondere 3,3 bis 4,3 Gew.-Teile, bezogen auf 100 Gew.-Teile der Polyhydroxylverbindungen (B).

Als Treibmittel geeignet sind ferner Flüssigkeiten, welche gegenüber den flüssigen, mit Urethangruppen modifizierten Polyisocyanatmischungen (A) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen sowie Mischungen aus solchen physikalisch wirkenden Treibmitteln und Wasser. Beispiele derartiger, vorzugsweise verwendbarer Flüssigkeiten sind Alkane, wie z.B. Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, z.B. wie Furan, Dimethylether und Diethylether, Ketone, wie z.B. Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlor-difluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Als Treibmittel vorzugsweise Verwendung finden Chlordifluormethan, Chlordifluorethane, Dichlorfluorethane, Pentangemische, Cyclohexan und insbesondere Wasser sowie Mischungen aus mindestens zwei dieser Treibmittel, z.B. Mischungen aus Wasser und Cyclohexan, Mischungen aus Chlordifluormethan und 1-Chlor-2,2-difluorethan und gegebenenfalls Wasser. Als Treibmittel nicht verwendet werden Fluorchlorkohlenwasserstoffe, die die Ozonschicht schädigen.

Die erforderliche Menge an physikalisch wirkenden Treibmitteln kann in Abhängigkeit von der gewünschten Schaumstoffdichte und der gegebenenfalls eingesetzten Wassermenge auf einfache Weise experimentell ermittelt werden und beträgt ungefähr 0 bis 25 Gew.-Teile, vorzugsweise 0 bis 15 Gew.-Teile pro 100 Gew.-Teile der Polyhydroxylverbindungen. Gegebenenfalls kann es zweckmäßig sein, die Urethangruppen gebunden enthaltenden Polyisocyanatmischungen (A) mit dem inerten physikalisch wirkenden Treibmittel zu mischen und dadurch ihre Viskosität zu verringern.

Als Katalysatoren (E) zur Herstellung der FCKW freien PU-Weichschaumstoffe und weichelastischen PU-Formschaumstoffe werden vorzugsweise Verbindungen verwendet, die die Reaktion der Hydroxylgruppen enthaltenden Verbindungen der Komponenten (B) und gegebenenfalls (C) mit den flüssigen, Urethangruppen gebunden enthaltenden Polyisocyanatmischungen auf MDI-Basis (A) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat und stark basische Amine, beispielsweise Amidine, wie z.B. 2,3-Dimethyl-3,4,5,6-tetrahydropyrimidin, tertiäre Amine, wie z.B. Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Di-(4-dimethylaminocyclohexl)-methan, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl) -s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen und Kombinationen aus den organischen Metallverbindungen und stark basischen Aminen. Vorzugsweise verwendet werden 0,001 bis 5 Gew.-%, insbesondere 0,05 bis 2 Gew.-% Katalysator bzw. Katalysatorkombination bezogen auf das Gewicht der Polyhydroxylverbindung (B).

Der Reaktionsmischung zur Herstellung der PU-Weich(form)schaumstoffe können gegebenenfalls auch noch Hilfsmittel und/oder Zusatzstoffe (F) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner Oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Polyhydroxylverbindungen (B), angewandt.

Als Füllstoffe, insbesondere verstärkend wirkende Füllstoffe, sind die an sich bekannten, üblichen organischen und anorganischen Füllstoffe, Verstärkungsmittel und Beschwerungsmittel zu verstehen. Im einzelnen seien beispielhaft genannt: anorganische Füllstoffe wie z.B. silikatische Mineralien, beispielsweise Schichtsilikate wie Antigorit, Serpentin, Hornblenden, Amphibole, Chrysotil, Zeolithe, Talkum; Metalloxide, wie z.B. Kaolin, Aluminiumoxide, Aluminiumsilikat, Titanoxide und Eisenoxide, Metallsalze wie z.B. Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.-%, bezogen auf das Gewicht der Komponenten (A) bis (C), einverleibt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat, Blähgraphit und Calciumsulfat oder Cyanursäurederivate, wie z.B. Melamin oder Mischungen aus mindestens zwei Flammschutzmitteln, wie z.B. Ammoniumpolyphosphaten und Melamin und/oder Blähgraphit sowie gegebenenfalls Stärke zum Flammfestmachen der erfindungsgemäß hergestellten PU-Weich(form)schaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (A) bis (C) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Weich(form)schaumstoffe werden die flüssigen Urethangruppen gebunden enthaltenden Polyisocyanatmischungen (A), höhermolekularen Polyhydroxylverbindungen (B) und gegebenenfalls Kettenverlängerungs- und/oder Vernetzungsmittel (C) in Gegenwart von Treibmitteln (D), Katalysatoren (E) und gegebenenfalls Hilfsmitteln und/oder Zusatzstoffen (F) bei Temperaturen von 0 bis 100°C, vorzugsweise 15 bis 80°C in solchen Mengenverhältnissen zur Reaktion gebracht, daß pro NCO-Gruppe 0,5 bis 2, vorzugsweise 0,8 bis 1,3 und insbesondere ungefähr eine reaktive(s) Wasserstoffatom(e) gebunden an die Ausgangskomponenten (B) und gegebenenfalls (C) vorliegen und, sofern Wasser als Treibmittel verwendet wird, das Molverhältnis von Äquivalente Wasser zu Äquivalente NCO-Gruppe 0,5 bis 5 : 1, vorzugsweise 0,7 bis 0,95 : 1 und insbesondere 0,75 bis 0,85 : 1 beträgt.

Die PU-Weich(form)schaumstoffe werden zweckmäßigerweise nach dem one shot-Verfahren durch Vermischen von zwei Komponenten hergestellt, wobei die Ausgangskomponenten (B), (D), (E) und gegebenenfalls (C) und (F) zu der sogenannten Polyol-Komponente vereinigt und als Polyisocyanat-Komponente die Urethangruppen gebunden enthaltende Polyisocyanatmischung gegebenenfalls im Gemisch mit (F) und inerten, physikalisch wirkenden Treibmitteln verwendet werden. Da die Polyol-Komponente und Polyisocyanat-Komponente sehr gut lagerstabil sind, müssen diese vor Herstellung der PU-Weich(form)schaumstoffe nur noch intensiv gemischt werden. Die Reaktionsmischung kann in offenen oder geschlossenen Formwerkzeugen verschäumt werden; sie eignet sich ferner zur Herstellung von Blockschaumstoffen.

Zur Herstellung von PU-Weichformschaumstoffen wird die Reaktionsmischung vorteilhafterweise mit einer Temperatur von 15 bis 80°C, vorzugsweise 30 bis 65°C in ein zweckmäßigerweise metallisches temperierbares Formwerkzeug eingebracht. Die Formwerkzeugtemperatur beträgt üblicherweise 20 bis 90°C, vorzugsweise 35 bis 70°C. Die Reaktionsmischung läßt man unter Verdichtung z.B. bei Verdichtungsgraden von 1,1 bis 8, vorzugsweise von 2 bis 6 und insbesondere 2,2 bis 4 in dem geschlossenen Formwerkzeug aushärten.

Die PU-Weichschaumstoffe besitzen freigeschäumte Dichten von 30 bis 50 g/l vorzugsweise von 32 bis 45 g/l und insbesondere von 36 bis 42 g/l. Aus derartigen Schaumstoff-Formulierungen hergestellte weichelastische PU-Schaumstoff-Formkörper besitzen in Abhängigkeit vom angewandten Verdichtsgrad eine Gesamtdichte von 36 bis 52 g/l, vorzugsweise von 38 bis 44 g/l.

Die nach dem erfindungsgemäßen Verfahren hergestellten PU-Weichschaumstoffe eignen sich z.B. als Sitzpolster für Polstermöbel und die PU-Formweichschaumstoffe als Polsterelemente, Armlehnen, Kopfstützen, Sonnenblenden und Sicherheitsabdeckungen in Fahrzeugkabinen, vorzugsweise in Kraftfahrzeugen und Flugzeugen.

### Beispiele

### Herstellung der Polyoxypropylen-polyoxyethylen-polyole

### Beispiel 1

In einem 10 Liter Rührautoklaven wurde eine Mischung aus
212 g Glycerin und
36,8g 47 gew.-%ige wäßrige Kaliumhydroxidlösung
1 Stunde lang bei 90°C unter einem verminderten Druck von 1,3 mbar zur Bildung des Alkoholats behandelt. Durch Zufuhr von trockenem Stickstoff wurde danach ein Druck von 2,5 bar im Rührautoklaven aufgepreßt und die erhaltene Startermischung mit einer Mischung, die bestand aus
2606 g Ethylenoxid und
2712 g 1,2-Propylenoxid,
bei einer Temperatur von 105°C in 6 Stunden alkoxyliert.

Die freien Alkylenoxide wurden danach unter vermindertem Druck (1,3 mbar) abgetrennt und nach dem Entspannen des Rührautoklaven der Reaktionsmischung 80 g Wasser und 200 g Adsorptionsmittel einverleibt. Nach einer Rührzeit von 2 Stunden wurden sämtliche Feststoffe durch Druckfiltration abgetrennt und das so gereinigte Polyoxypropylen-polyoxyethylenpolyol unter vermindertem Druck bei 1,3 mbar und 100°C 3 Stunden lang getrocknet. Zur Stabilisierung wurden in dem Produkt 1500 ppm Di-tert.-butyl-p-kresol gelöst.

Das auf diese Weise hergestellte Polyoxypropylen-polyoxyethylen-polyol besaß eine Hydroxylzahl von 69, einen Gehalt an sekundären Hydroxylgruppen von 91 %, eine Viskosität von 420 mPas, gemessen bei 25°C, und einen Wassergehalt von 0,025 Gew.-%. Der Gehalt an polymerisierten, in statistischer Verteilung gebundenen Ethylenoxidgruppen betrug 49 Gew.-%, bezogen auf das Gesamtgewicht an polymerisierten Ethylen- und 1,2-Propylenoxidgruppen.

### Vergleichsbeispiele I bis XIV

Man verfuhr analog den Angaben des Beispiels 1, verwendete jedoch die in Tabelle 1 genannten Startermoleküle und Gewichtsverhältnisse von 1,2-Propylenoxid (PO) : Ethylenoxid (EO).

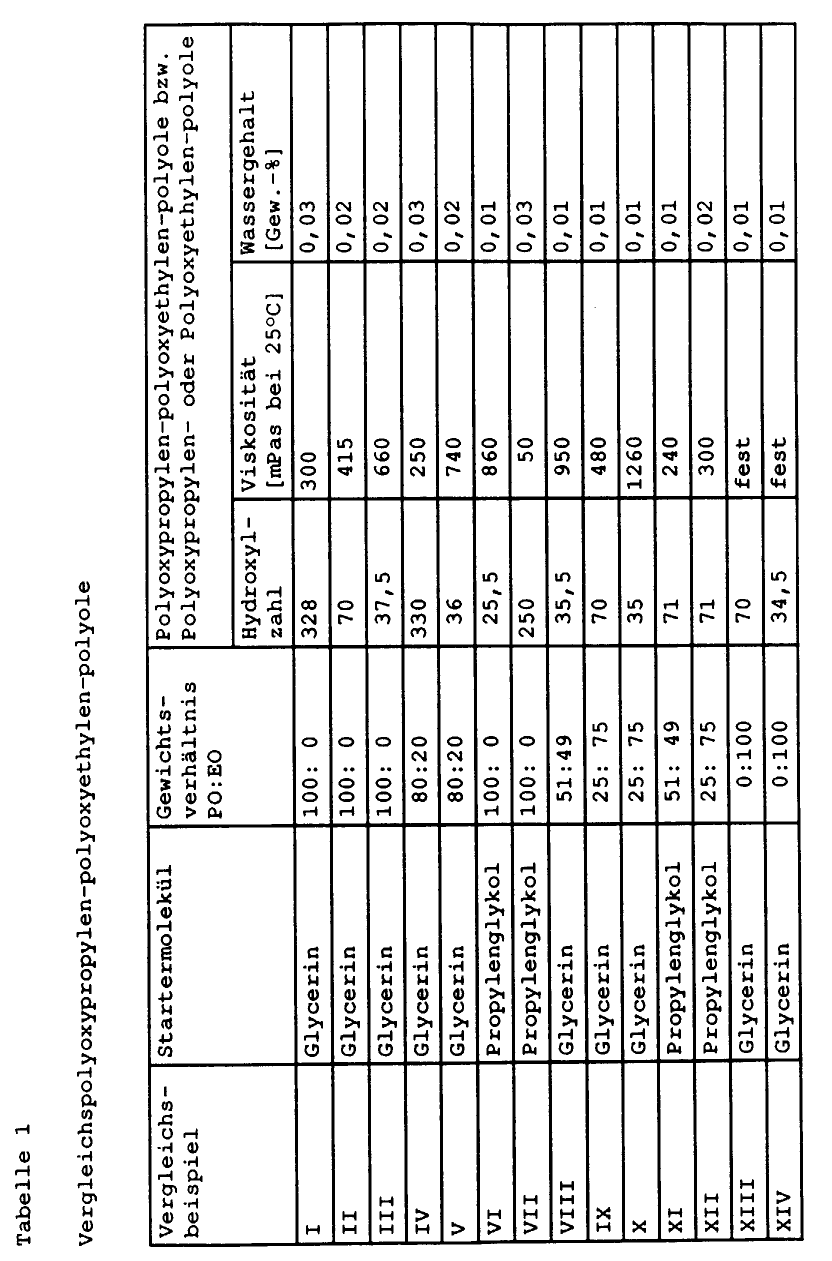

### Herstellung der Urethangruppen gebunden enthaltenden Polyisocyanatmischungen (A)

### Zweistufige Verfahrensvariante

### Beispiel 2

Zu einer Mischung aus 611 Gew.-Teilen 4,4'-MDI und 0,4 Gew.-Teilen Benzoylchlorid fügte man unter Rühren bei 80°C 562 Gew.-Teile des Polyoxypropylen-polyoxyethylen-polyols, hergestellt gemäß Beispiel 1. Nach einer Nachreaktionszeit von 2 Stunden bei 80°C ließ man die mit Urethangruppen modifizierte Polyisocyanatmischung auf 4,4'-MDI-Basis auf 40°C abkühlen und verdünnte diese mit 3324 Gew.-Teilen Roh-MDI, das enthielt
- 1694,8 Gew.-Teile: (50,49 Gew.-%) 4,4'-MDI,
- 22,5 Gew.-Teile: (0,34 Gew.-%) 2,2'-MDI,
- 586,7 Gew.-Teile: (18,48 Gew.-%) 2,4'-MDI und
- 1020 Gew.-Teile: (30,69 Gew.-%) tri- und höherfunktionelle Polyphenyl-polymethylen-polyisocyanate.

Das erhaltene Produkt besaß einen NCO-Gehalt von 27,4 Gew.-%, eine Viskosität bei 25°C von 128 mPas und enthielt einen Gewichtsanteil des Polyoxypropylen-polyoxyethylen-polyols von 12,5 Gew.-%, bezogen auf das Gesamtgewicht.

### Einstufige Verfahrensvariante

### Beispiel 3

Zu 30627 Gew.-Teilen Roh-MDI, das bestand aus
- 17948,5 Gew.-Teilen: (58,03 Gew.-%) 4,4'-MDI,
- 4565,9 Gew.-Teilen: (15,77 Gew.-%) 2,4'-MDI,
- 174,9 Gew.-Teilen: ( 0,29 Gew.-%) 2,2'-MDI und
- 7937,7 Gew.-Teilen: (25,91 Gew.-%) tri- und höherfunktionellen Polyphenyl-polymethylen-polyisocyanaten
fügte man unter Rühren bei 80°C in einem Zeitraum von einer Stunde
4373 Gew.-Teile des gemäß Beispiel 1 hergestellten Polyoxypropylen-polyoxyethylen-polyols.

Nach einer Nachreaktionszeit von einer Stunde ließ man die Urethangruppen enthaltende Polyisocyanatmischungen auf MDI-Basis auf Raumtemperatur abkühlen. Das Produkt besaß einen NCO-Gehalt von 27,8 Gew.-%, eine Viskosität bei 25°C von 120 mPas und enthielt einen Gewichtsanteil des Polyoxypropylen-polyoxyethylen-polyols von 12,5 Gew.-%, bezogen auf das Gesamtgewicht.

### Vergleichsbeispiele XV bis XXVIII

Man verfuhr analog den Angaben des Beispiels 2, verwendete jedoch die in Tabelle 2 genannten nach den Vergleichsbeispielen I bis XIV hergestellten Polyoxyalkylenpolyole (PE) und 4,4'-MDI und Roh-MDI in den beschriebenen Mengen.

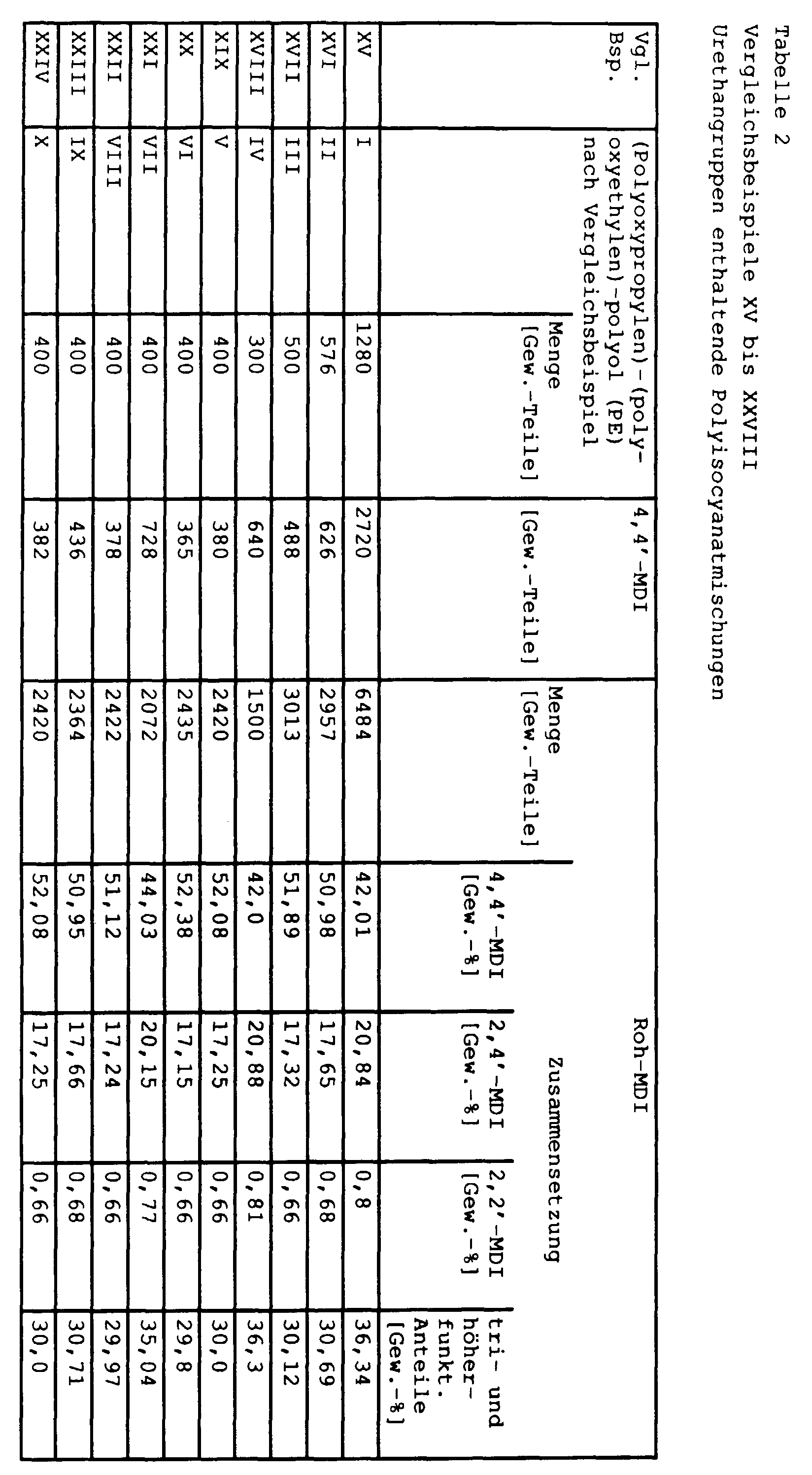

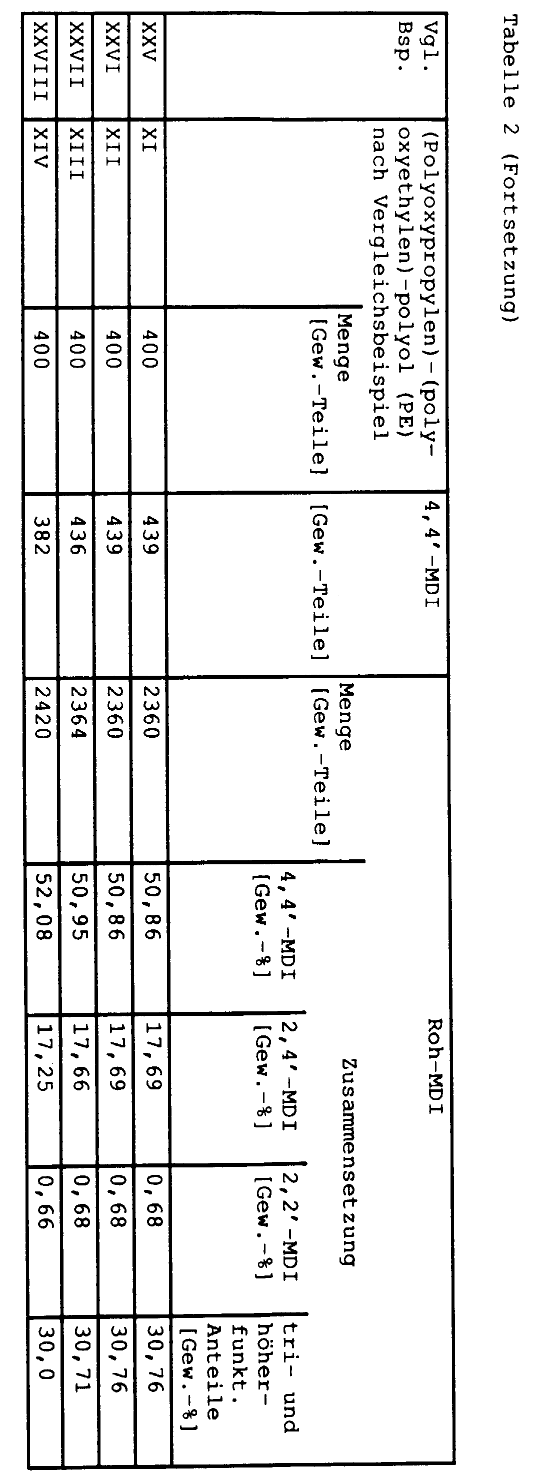

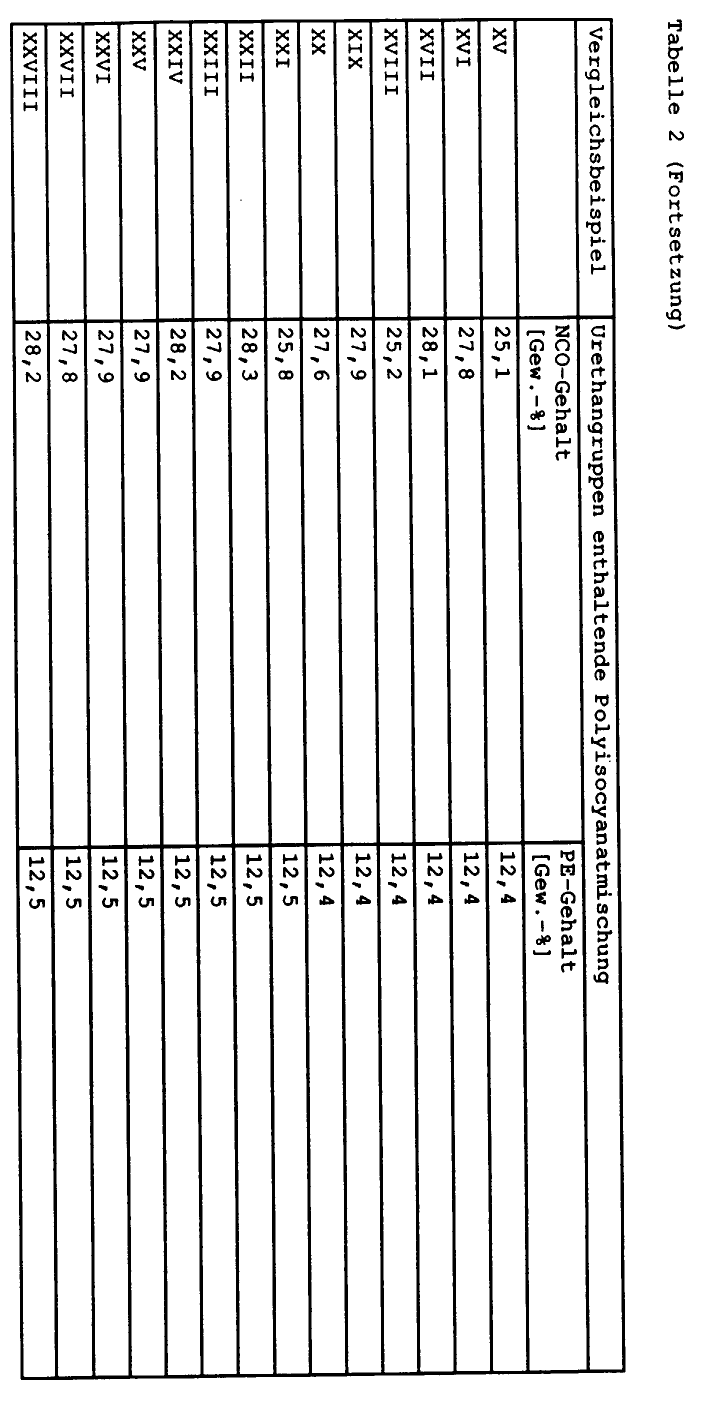

### Herstellung der Polyurethan-Weichformschaumstoffe

### Beispiel 4

Polyol-Komponente: Mischung, die bestand aus
- 93,08 Gew.-Teilen: eines mit Glycerin gestarteten Polyoxypropylen (86 Gew.-%)-polyoxyethylen 14 Gew.-%)-blockpolyols mit einer Hydroxylzahl von 28, entsprechend einem Molekulargewicht von ungefähr 6000,
- 2,5 Gew.-Teilen: eines mit Glycerin gestarteten Polyoxypropylen (30 Gew.-%)-polyoxyethylen (70 Gew.-%)-polyols mit einer Hydroxylzahl von 42, entsprechend einem Molekulargewicht von ungefähr 4010, und statistischer Verteilung der polymerisierten Alkylenoxidgruppen,
- 3,3 Gew.-Teilen: Wasser,
- 0,12 Gew.-Teilen: einer 70 gew.-%igen Lösung von Bis(dimethylaminoethyl)ether in Dipropylenglykol,
- 0,45 Gew.-Teilen: einer 33 gew.-%igen Lösung von Diazabicyclo(2,2,2)octan in Dipropylenglykol,
- 0,45 Gew.-Teilen: 2-(2-Dimethylaminoethoxy)ethanol und
- 0,10 Gew.-Teilen: eines Stabilisators auf Silikonbasis (Tegostab® B 8680 der Goldschmidt AG, Essen)

### Polyisocyanat-Komponente: Mit Urethangruppen modifizierte Polyisocyanatmischung, hergestellt nach Beispiel 2

Zur Herstellung des weichelastischen PU-Formschaumstoffs wurde die Polyol- und Polyisocyanat-Koponente bei 23°C in Mengen entsprechend einem Isocyanatindex von 80 intensiv gemischt. Ungefähr 750 g der erhaltenen Reaktionsmischung wurden in ein auf 45°C temperiertes metallisches Formwerkzeug mit den inneren Abmessungen 40 x 40 x 10 cm eingefüllt, das Formwerkzeug geschlossen und die Reaktionsmischung aufschäumen gelassen. Der gebildete weichelastische PU-Formkörper wurde nach 5 Minuten entformt.

Die an dem erhaltenen PU-Formkörper gemessenen mechanischen Eigenschaften sind in Tabelle 3 beschrieben.

### Beispiel 5

### Polyol-Komponente: analog Beispiel 4

### Polyisocyanat-Komponente: mit Urethangruppen modifizierte Polyisocyanatmischung nach Beispiel 3

Die Herstellung des weichelastischen Polyurethan-Formschaumstoffs erfolgte analog den Angaben des Beispiels 4.

Die an dem erhaltenen PU-Formkörper gemessenen mechanischen Eigenschaften sind in Tabelle 3 beschrieben.

### Vergleichsbeispiele XXIX bis XLII

Man verfuhr analog den Angaben des Beispiels 4, verwendete jedoch die in Tabelle 3 genannten, mit Urethangruppen modifizierten Polyisocyanatmischungen, hergestellt gemaß den Vergleichsbeispielen XV bis XXVIII.

Die an den erhaltenen PU-Formkörpern gemessenen mechanischen Eigenschaften sind in Tabelle 3 zusammengefaßt.

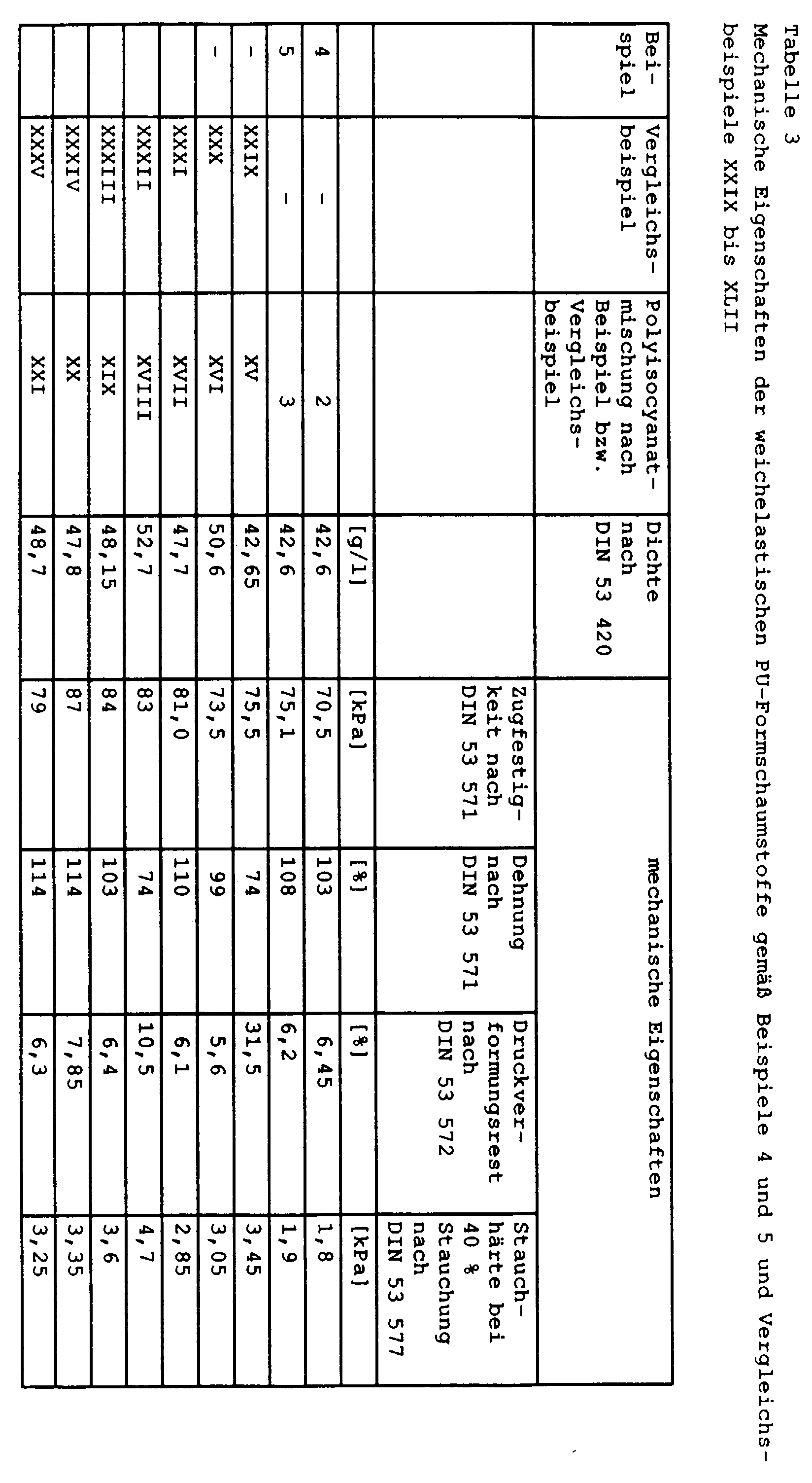

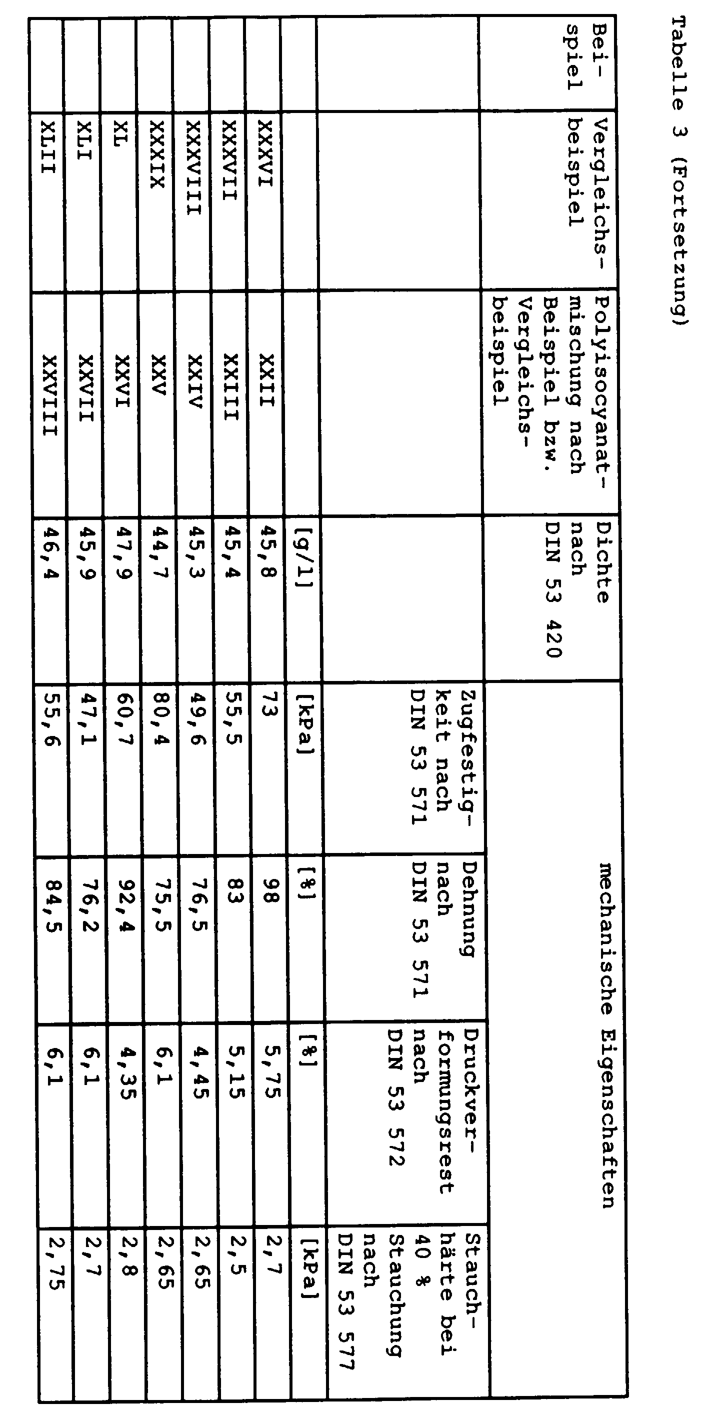

Die Raumgewichte der weichelastischen PU-Formschaumstoffe nach den Beispielen 2 und 3 lagen mit 42,6 g/l im Vergleich zu den Raumgewichten der PU-Formschaumstoffe der Vergleichsbeispiele, die unter Verwendung derselben Polyol-Komponente hergestellt wurden, sehr niedrig. Trotz dieses niedrigen Raumgewichts waren die mechanischen Eigenschaften der PU-Formschaumstoffe zumindest vergleichbar, vielfach sogar besser. Insbesondere die Stauchhärte zeigte für mit Wasser getriebene PU-Weichschaumstoffe mit 1,8 kPa bzw. 1,9 kPa überraschend niedrige Werte. Der PU-Formschaumstoff nach Vergleichsbeispiel XXIX besaß zwar ein Raumgewicht von 42,65 g/l, wies jedoch eine Stauchhärte von 3,45 kPa auf und besaß mit 31,5 % einen unzulänglichen Druckverformungsrest.

## Patentansprüche

1. Verfahren zur Herstellung von Polyurethan-Weichschaumstoffen und weichelastischen Polyurethan-Formschaumstoffen die frei sind von Fluorchlorkohlenwasserstoffen, die die Ozonschicht schädigen, durch Umsetzung von
A) flüssigen, Urethangruppen gebunden enthaltenden Polyisocyanatmischungen auf Diphenylmethan-diisocyanatbasis mit
B) höhermolekularen Polyhydroxylverbindungen mit Molekulargewichten von 800 und mehr und
C) gegebenenfalls Kettenverlängerungsmitteln und/oder Vernetzungsmitteln
in Gegenwart von
D) Treibmitteln,
E) Katalysatoren
sowie gegebenenfalls
F) Hilfsmitteln und/oder Zusatzstoffen,
dadurch gekennzeichnet, daß die flüssigen Urethangruppen gebunden enthaltende Polyisocyanatmischung (A) einen Gehalt an NCO-Gruppen von 22 bis 30 Gew.-%, bezogen auf das Gesamtgewicht, besitzen und erhalten werden
I) durch Umsetzung
a) einer Mischung (I) aus Diphenylmethan-diisocyanaten und Polyphenyl-polymethylen-polyisocyanaten mit einem Gehalt an Diphenylmethandiisocyanat-Isomeren von 35 bis 94 Gew.-%, bezogen auf das Gesamtgewicht, mit
b) mindestens einem Polyoxypropylen-polyoxyethylen-polyol (b) mit einer Funktionalität von 2,5 bis 3,5, einer Hydroxylzahl von 50 bis 90 und einem Gehalt an polymerisierten Ethylenoxidgruppen von mehr als 30 bis weniger als 50 Gew.-%, bezogen auf das Gewicht an polymerisierten Ethylenoxid- und 1,2-Propylenoxidgruppen
oder
II) durch Verdünnung
c) eines Urethangruppen enthaltenden Quasiprepolymeren mit einem NCO-Gehalt von 10 bis 19 Gew.-%, erhalten durch Umsetzung von 4,4'-Diphenylmethandiisocyanat oder einer Mischung aus Diphenylmethandiisocyanat-Isomeren (II) mit dem vorgenannten Polyoxypropylen-polyoxyethylen-polyol (b), mit a) der vorgenannten Mischung (I) aus Diphenylmethan-diisocyanaten und Polyphenyl-polymethylen-polyisocyanaten.

2. Verfahren nach Anspruch 1, dadurch gekennzeichnet, daß die Mischung (I) aus Diphenylmethan-diisocyanaten und Polyphenyl-polymethylen-polyisocyanaten, bezogen auf das Gesamtgewicht, enthält
Ia1) 34 bis 65 Gew.-% 4,4'-Diphenylmethan-diisocyanat,
Ia2) 1 bis 25 Gew.-% 2,4'-Diphenylmethan-diisocyanat,
Ia3) 0 bis 4 Gew.-% 2,2'-Diphenylmethan-diisocyanat und
Ia4) 65 bis 6 Gew.-% mindestens trifunktionelle Polyphenyl-polymethylen-polyisocyanate.

3. Verfahren nach Anspruch 1, dadurch gekennzeichnet, daß die Mischung aus Diphenylmethan-diisocyanat-Isomeren (II), bezogen auf das Gesamtgewicht, enthält
IIa1) 90 bis 48 Gew.-% 4,4'-Diphenylmethan-diisocyanat,
IIa2) 10 bis 48 Gew.-% 2,4'-Diphenylmethan-diisocyanat und
IIa3) 0 bis 4 Gew.-% 2,2'-Diphenylmethan-diisocyanat.

4. Verfahren nach Anspruch 1, dadurch gekennzeichnet, daß die Polyoxypropylen-polyoxyethylen-polyole (b) zur Herstellung der Urethangruppen enthaltenden Polyisocyanatmischung (A) eine Funktionalität von 2,5 bis 3,0, eine Hydroxylzahl von 65 bis 75 und einen Gehalt an polymerisierten Ethylenoxidgruppen von 45 bis 49 Gew.-%, bezogen auf das Gewicht an polymerisierten Ethylenoxid- und 1,2-Propylenoxidgruppen, besitzen.

5. Verfahren nach Anspruch 1, dadurch gekennzeichnet, daß die Polyoxypropylen-polyoxyethylen-polyole (b) zur Herstellung der Urethangruppen enthaltenden Polyisocyanatmischung (A) die polymerisierten Ethylenoxid- und 1,2-Propylenoxidgruppen in statistischer Verteilung gebunden enthalten und einen Gehalt an sekundären Hydroxylgruppen von mindestens 50 % besitzen.

6. Verfahren nach Anspruch 1, dadurch gekennzeichnet, daß man als höhermolekulare Polyhydroxylverbindungen (B) Polyether-polyole mit einer Funktionalität von 2 bis 3 und einem Molekulargewicht von 800 bis 8200 oder Mischungen mit einer Funktionalität von 2 bis 3 und einem Molekulargewicht von 800 bis 8200 verwendet aus derartigen Polyether-polyolen und polymermodifizierten Polyether-polyolen aus der Gruppe der Pfropfpolyether-polyole oder Polyether-polyoldispersionen, die als disperse Phase Polyharnstoffe, Polyhydrazide oder tertiäre Aminogruppen gebunden enthaltende Polyurethane enthalten.

7. Verfahren nach Anspruch 1, dadurch gekennzeichnet, daß man als Treibmittel (D) Wasser verwendet.

8. Flüssige, Urethangruppen gebunden enthaltende Polyisocyanatmischungen auf Diphenylmethan-diisocyanatbasis mit einem Gehalt an NCO-Gruppen von 22 bis 30 Gew.-%, erhalten
I) durch Umsetzung
a) einer Mischung (I) aus Diphenylmethan-diisocyanaten und Polyphenyl-polymethylen-polyisocyanaten mit einem Gehalt an Diphenylmethandiisocyanat-Isomeren von 35 bis 94 Gew.-%, bezogen auf das Gesamtgewicht, mit
b) mindestens einem Polyoxypropylen-polyoxyethylen-polyol (b) mit einer Funktionalität von 2,5 bis 3,5, einer Hydroxylzahl von 50 bis 90 und einem Gehalt an polymerisierten Ethylenoxidgruppen von mehr als 30 bis weniger als 50 Gew.-%, bezogen auf das Gewicht an polymerisierten Ethylenoxid- und 1,2-Propylenoxidgruppen
oder
II) durch Verdünnung
c) eines Urethangruppen enthaltenden Quasiprepolymeren mit einem NCO-Gehalt von 10 bis 19 Gew.-%, erhalten durch Umsetzung von 4,4'-Diphenylmethan-diisocyanat oder einer Mischung aus Diphenylmethan-diisocyanat-Isomeren (II) mit dem vorgenannten Polyoxypropylen-polyoxyethylen-polyol (b), mit
a) der vorgenannten Mischung (I) aus Diphenylmethan-diisocyanaten und Polyphenyl-polymethylen-polyisocyanaten mit einem Gehalt an Diphenylmethan-diisocyanat-Isomeren von 35 bis 94 Gew.-%, bezogen auf das Gesamtgewicht.

9. Flüssige, Urethangruppen enthaltende Polyisocyanatmischungen nach Anspruch 8, dadurch gekennzeichnet, daß die Polyoxypropylen-polyoxyethylen-polyole (b) eine Funktionalität von 2,5 bis 3, eine Hydroxylzahl von 65 bis 75 und einen Gehalt an polymerisierten Ethylenoxidgruppen von 45 bis 49 Gew.-%, bezogen auf das Gewicht an polymerisierten Ethylenoxid- und 1,2-Propylenoxidgruppen, besitzen.

10. Flüssige, Urethangruppen enthaltende Polyisocyanatmischungen nach Anspruch 8, dadurch gekennzeichnet, daß die Polyoxypropylen-polyoxyethylen-polyole (b) die polymerisierten Ethylenoxid- und 1,2-Propylenoxidgruppen in statistischer Verteilung gebunden enthalten und einen Gehalt an sekundären Hydroxylgruppen von mindestens 50 % besitzen.

## Claims

1. A process for producing flexible polyurethane foams and flexible molded polyurethane foams which are free of chlorofluorocarbons which damage the ozone layer, by reacting
A) liquid polyisocyanate mixtures based on diphenylmethane diisocyanate and containing bonded urethane groups with
B) relatively high molecular weight polyhydroxyl compounds having molecular weights of 800 and more and
C) if desired, chain extenders and/or crosslinkers
in the presence of
D) blowing agents,
E) catalysts
and also, if desired,
F) auxiliaries and/or additives,
wherein the liquid polyisocyanate mixtures containing bonded urethane groups (A) have an NCO group content of from 22 to 30% by weight, based on the total weight, and are obtained
I) by reacting
a) a mixture (I) of diphenylmethane diisocyanates and polyphenylpolymethylene polyisocyanates having a content of diphenylmethane diisocyanate isomers of from 35 to 94% by weight, based on the total weight, with
b) at least one polyoxypropylene-polyoxyethylene polyol (b) having a functionality of from 2.5 to 3.5, a hydroxyl number of from 50 to 90 and a content of polymerized ethylene oxide groups of from more than 30 to less than 50% by weight, based on the weight of polymerized ethylene oxide and 1,2-propylene oxide groups
or
II) by diluting
c) a pseudoprepolymer containing urethane groups and having an NCO content of from 10 to 19% by weight, obtained by reacting diphenylmethane 4,4'-diisocyanate or a mixture of diphenylmethane diisocyanate isomers (II) with the abovementioned polyoxypropylene-polyoxyethylene polyol (b), with
a) the abovementioned mixture (I) of diphenylmethane diisocyanates and polyphenylpolymethylene polyisocyanates.

2. A process as claimed in claim 1, wherein the mixture (I) of diphenylmethane diisocyanates and polyphenylpolymethylene polyisocyanates contains, based on the total weight,
Ia1) from 34 to 65% by weight of diphenylmethane 4,4'-diisocyanate,
Ia2) from 1 to 25% by weight of diphenylmethane 2,4'-diisocyanate,
Ia3) from 0 to 4% by weight of diphenylmethane 2,2'-diisocyanate and
Ia4) from 65 to 6% by weight of at least trifunctional polyphenylpolymethylene polyisocyanates.

3. A process as claimed in claim 1, wherein the mixture of diphenylmethane diisocyanate isomers (II) contains, based on the total weight,
IIa1) from 90 to 48% by weight of diphenylmethane 4,4'-diisocyanate,
IIa2) from 10 to 48% by weight of diphenylmethane 2,4'-diisocyanate and
IIa3) from 0 to 4% by weight of diphenylmethane 2,2'-diisocyanate.

4. A process as claimed in claim 1, wherein the polyoxypropylene-polyoxyethylene polyols (b) for preparing the polyisocyanate mixture containing urethane groups (A) have a functionality of from 2.5 to 3.0, a hydroxyl number of from 65 to 75 and a content of polymerized ethylene oxide groups of from 45 to 49% by weight, based on the weight of polymerized ethylene oxide and 1,2-propylene oxide groups.

5. A process as claimed in claim 1, wherein the polyoxypropylene-polyoxyethylene polyols (b) for preparing the polyisocyanate mixture containing urethane groups (A) contain the polymerized ethylene oxide and 1,2-propylene oxide groups randomly distributed in bonded form and have a content of secondary hydroxyl groups of at least 50%.

6. A process as claimed in claim 1, wherein the relatively high molecular weight polyhydroxyl compounds (B) used are polyether polyols having a functionality of from 2 to 3 and a molecular weight of from 800 to 8200 or mixtures having a functionality of from 2 to 3 and a molecular weight of from 800 to 8200 of such polyether polyols and polymer-modified polyether polyols from the group of graft polyether polyols or polyether polyol dispersions containing as dispersed phase polyureas, polyhydrazides or polyurethanes containing bonded tertiary amino groups.

7. A process as claimed in claim 1, wherein water is used as blowing agent (D).

8. A liquid polyisocyanate mixture based on diphenylmethane diisocyanate containing bonded urethane groups and having an NCO group content of from 22 to 30% by weight, obtained
I) by reacting
a) a mixture (I) of diphenylmethane diisocyanates and polyphenylpolymethylene polyisocyanates having a content of diphenylmethane diisocyanate isomers of from 35 to 94% by weight, based on the total weight, with
b) at least one polyoxypropylene-polyoxyethylene polyol (b) having a functionality of from 2.5 to 3.5, a hydroxyl number of from 50 to 90 and a content of polymerized ethylene oxide groups of from more than 30 to less than 50% by weight, based on the weight of polymerized ethylene oxide and 1,2-propylene oxide groups
or
II) by diluting
c) a pseudoprepolymer containing urethane groups and having an NCO content of from 10 to 19% by weight, obtained by reacting diphenylmethane 4,4'-diisocyanate or a mixture of diphenylmethane diisocyanate isomers (II) with the abovementioned polyoxypropylene-polyoxyethylene polyol (b), with
a) the abovementioned mixture (I) of diphenylmethane diisocyanates and polyphenylpolymethylene polyisocyanates having a content of diphenylmethane diisocyanate isomers of from 35 to 94% by weight, based on the total weight.

9. A liquid polyisocyanate mixture containing urethane groups as claimed in claim 8, wherein the polyoxypropylene-polyoxyethylene polyols (b) have a functionality of from 2.5 to 3, a hydroxyl number of from 65 to 75 and a content of polymerized ethylene oxide groups of from 45 to 49% by weight, based on the weight of polymerized ethylene oxide and 1,2-propylene oxide groups.

10. A liquid polyisocyanate mixture containing urethane groups as claimed in claim 8, wherein the polyoxypropylene-polyoxyethylene polyols (b) contain the polymerized ethylene oxide and 1,2-propylene oxide groups randomly distributed in bonded form and have a content of secondary hydroxyl groups of at least 50%.

## Revendications

1. Procédé pour la préparation de matières alvéolaires souples de polyuréthanne et de matières moulées alévolaires souples et élastiques de polyuréthanne, qui sont exemptes d'hydrocarbures fluorochlorés qui endommagent la couche d'ozone, par réaction de
A) des mélanges de polyisocyanates liquides, contenant à l'état lié des groupes uréthanne, à base de diphénylméthane-diisocyanate, avec
B) des composés polyhydroxylés de masse moléculaire élevée, ayant des masses moléculaires de 800 et plus, et
C) éventuellement des agents d'allongement de chaîne et/ou des agents réticulants,
en présence
D) d'agents gonflants,
E) de catalyseurs,
ainsi qu'éventuellement
F) d'adjuvants et/ou d'additifs,
caractérisé par le fait que les mélanges de polyisocyanates liquides, contenant des groupes uréthanne à l'état lié, (A) présentent une teneur en groupes NCO de 22 à 30 % en poids, par rapport au poids d'ensemble, et sont obtenus
I) par réation
a) d'un mélange (I) de diphénylméthane-diisocyanates et de polyphényl-polyméthylène-polyisocyanates ayant une teneur en isomères de diphénylméthane-diisocyanate de 35 à 94 % en poids, par rapport au poids d'ensemble, avec
b) au moins un polyoxypropylène-polyoxyéthylène-polyol (b) ayant une fonctionnalité de 2,5 à 3,5, un indice d'hydroxyle de 50 à 90 et une teneur en groupes oxyde d'éthylène polymérisés allant de plus de 30 à moins de 50 % en poids, par rapport au poids des groupes oxyde d'éthylène et oxyde de 1,2-propylène polymérisés
ou
II) par dilution
c) d'un quasi-prépolymère contenant des groupes uréthanne ayant une teneur en NCO de 10 à 19 % en poids, obtenu par réaction de 4,4'-diphénylméthane-diisocyanate ou d'un mélange d'isomères de diphénylméthanediisocyanate (II) avec le polyoxy-propylène-polyoxyéthylène-polyol susmentionné (b), avec a) le mélange susmentionné (I) de diphénylméthane-diisocyanates et de polyphényl-polyméthylène-polyisocyanates.

2. Procédé selon la revendication 1, caractérisé par le fait que le mélange (I) de diphénylméthane-diisocyanates et de polyphényl-polyméthylène-polyisocyanates contient, par rapport au poids d'ensemble,
Ia1) 34 à 65 % en poids de 4,4'-diphénylméthane-diisocyanate,
Ia2) 1 à 25 % en poids de 2,4'-diphénylméthane-diisocyanate,
Ia3) 0 à 4 % en poids de 2,2'--diphénylméthane-diisocyanate et
Ia4) 65 à 6 % en poids de polyphényl-polyméthylène-polyisocyanates au moins trifonctionnels.

3. Procédé selon la revendication 1, caractérisé par le fait que le mélange d'isomères de diphénylméthane-diisocyanate (II) contient, par rapport au poids d'ensemble,
IIa1) 90 à 48 % en poids de 4,4'-diphénylméthane-diisocyanate,
IIa2) 10 à 48 % en poids de 2,4'-diphénylméthane-diisocyanate,
IIa3) 0 à 4 % en poids de 2,2'--diphénylméthane-diisocyanate.

4. Procédé selon la revendication 1, caractérisé par le fait que les polyoxypropylène-polyoxyéthylène-polyols (b) pour la préparation du mélange de polyisocyanates contenant des groupes uréthanne (A) possèdent une fonctionnalité de 2,5 à 3,0, un indice d'hydroxyle de 65 à 75 et une teneur en groupes oxyde d'éthylène polymérisés de 45 à 49 % en poids, par rapport au poids de groupes oxyde d'éthylène et oxyde de 1,2-propylène polymérisés.

5. Procédé selon la revendication 1, caractérisé par le fait que les polyoxypropylène-polyoxyéthylène-polyols (b) pour la préparation du mélange de polyisocyanates contenant des groupes uréthanne (A) contiennent les groupes oxyde d'éthylène et oxyde de 1,2-propylène polymérisés liés selon une répartition statistique et présentent une teneur en groupes hydroxyle secondaires d'au moins 50 %.

6. Procédé selon la revendication 1, caractérisé par le fait qu'on utilise comme composés polyhydroxylés de masse moléculaire élevée (B) des polyéther-polyols ayant une fonctionnalité de 2 à 3 et une masse moléculaire de 800 à 8200 ou des mélanges ayant une fonctionnalité de 2 à 3 et une masse moléculaire de 800 à 8200 de polyéther-polyols de ce type et de polyéther-polyols modifiés par des polymères du groupe des polyéther-polyols greffés ou des dispersions de polyéther-polyols, qui contiennent comme phase dispersée des polyurées, des polyhydrazides ou des polyuréthannes contenant à l'état lié des groupes amino tertiaires.

7. Procédé selon la revendication 1, caractérisé par le fait qu'on emploie de l'eau comme agent gonflant (D).

8. Mélanges de polyisocyanates liquides, contenant des groupes uréthanne à l'état lié, ayant une teneur en groupes NCO de 22 à 30 % en poids, par rapport au poids d'ensemble, obtenus
I) par réation
a) d'un mélange (I) de diphénylméthane-diisocyanates et de polyphényl-polyméthylène-polyisocyanates ayant une teneur en isomères de diphénylméthane-diisocyanate de 35 à 94 % en poids, par rapport au poids d'ensemble, avec
b) au moins un polyoxypropylène-polyoxyéthylène-polyol (b) ayant une fonctionnalité de 2,5 à 3,5, un indice d'hydroxyle de 50 à 90 et une teneur en groupes oxyde d'éthylène polymérisés allant de plus de 30 à moins de 50 % en poids, par rapport au poids des groupes oxyde d'éthylène et oxyde de 1,2-propylène polymérisés
ou
II) par dilution
c) d'un quasi-prépolymère contenant des groupes uréthanne ayant une teneur en NCO de 10 à 19 % en poids, obtenu par réaction de 4,4'-diphénylméthane-diisocyanate ou d'un mélange d'isomères de diphénylméthanediisocyanate (II) avec le polyoxypropylène-polyoxyéthylène-polyol susmentionné (b), avec
a) le mélange susmentionné (I) de diphénylméthane-diisocyanates et de polyphényl-polyméthylène-polyisocyanates ayant une teneur en isomères de diphénylméthane-diisocyanate de 35 à 94 % en poids, par rapport au poids d'ensemble.

9. Mélanges de polyisocyanates liquides, contenant des groupes uréthanne, selon la revendication 8, caractérisés par le fait que les polyoxypropylène-polyoxyéthylène-polyols (b) possèdent une fonctionnalité de 2,5 à 3, un indice d'hydroxyle de 65 à 75 et une teneur en groupes oxyde d'éthylène polymérisés de 45 à 49 % en poids, par rapport au poids de groupes oxyde d'éthylène et oxyde de 1,2-propylène polymérisés.

10. Mélanges de polyisocyanates liquides, contenant des groupes uréthanne, selon la revendication 8, caractérisés par le fait que les polyoxypropylène-polyoxyéthylène-polyols (b) contiennent les groupes oxyde d'éthylène et oxyde de 1,2-propylène polymérisés liés selon une répartition statistique et possèdent une teneur en groupes hydroxyle secondaires d'au moins 50 %.
